(19) Europäisches Patentamt / European Patent Office / Office européen des brevets

(11) **EP 4 618 028 A1**

(12) **EUROPEAN PATENT APPLICATION**

(43) Date of publication:
**17.09.2025 Bulletin 2025/38**

(21) Application number: **24305384.0**

(22) Date of filing: **14.03.2024**

(51) International Patent Classification (IPC):
**G06T 19/00** (2011.01)    **H04N 21/44** (2011.01)

(52) Cooperative Patent Classification (CPC):
**G06T 19/006; H04N 21/44012; H04N 21/84**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• HIRTZLIN, Patrice
  35830 BETTON (FR)

• LELIEVRE, Sylvain
  35760 MONTGERMONT (FR)
• FAIVRE D'ARCIER, Etienne
  35750 SAINT GONLAY (FR)
• JOUET, Pierrick
  35000 RENNES (FR)
• FONTAINE, Loic
  35530 NOYAL SUR VILAINE (FR)

(74) Representative: **Vossius & Partner
Patentanwälte Rechtsanwälte mbB
Siebertstraße 3
81675 München (DE)**

(54) **APPARATUS AND METHOD OF SPATIAL SYNCHRONIZATION BETWEEN XR GRAPHS**

(57) Spatial synchronization is provided between extended reality (XR) graphs. An example method includes: determining a first coordinate transform between a first coordinate system, being a global coordinate system of a main graph, and a second coordinate system of a first node in the main graph; determining a second coordinate transform between the second coordinate system and a third coordinate system of a second node in an auxiliary graph; based on the first and second coordinate transforms, determining a third coordinate transform between the first and third coordinate systems; and communicating the third coordinate transform and an identifier of the second node to a renderer of the auxiliary graph. The renderer uses this information to determine a fifth coordinate transform, $P_B{}^{,B}$, between the first and fourth coordinate system. The renderer may then convert the coordinates of nodes or trackables into the coordinate system of the auxiliary graph.

MAIN GRAPH

DETERMINE FIRST COORDINATE TRANSFORM $P_B{}^{Bref}$ — 902

DETERMINE SECOND COORDINATE TRANSFORM $P_{Bref}{}^{Bref'}$ — 904

DETERMINE THIRD COORDINATE TRANSFORM $P_{align} = [P_{Bref}{}^{Bref'}]^{-1} [P_B{}^{Bref}]^{-1}$ — 906

COMMUNICATE THIRD COORDINATE TRANSFORM AND IDENTIFY NODE — 908

AUXILIARY GRAPH

DETERMINE FOURTH COORDINATE TRANSFORM $P_{B'}{}^{Bref'}$ — 910

DETERMINE FIFTH COORDINATE TRANSFORM $P_B{}^{,B}$ — 912

OBTAIN POSE OF MAPPED NODE OR TRACKABLE — 914

TRANSFORM POSE OF MAPPED NODE OR TRACKABLE — 916

RENDER AUXILIARY GRAPH — 918

$P_{align}$
referenceId
$(x,y,z)_B$
$(x,y,z)_{B'}$

**FIG. 9**

EP 4 618 028 A1

**Description**

**BACKGROUND**

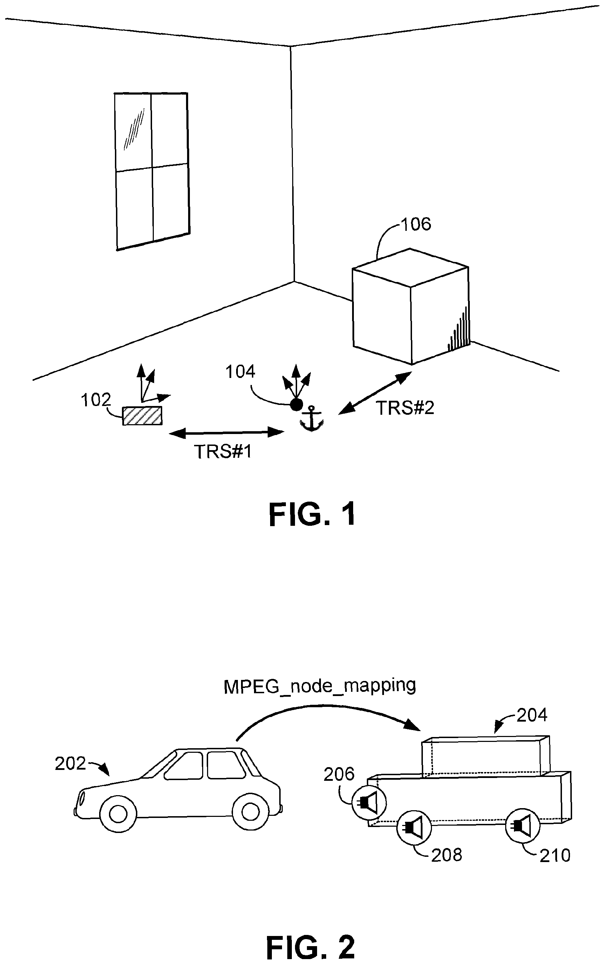

An AR application calls for a seamless insertion of virtual content into the user's real environment. Such an application may make use of the Anchor, Trackable and XR Space concepts as described in the 3GPP TS 26.119, Device Media Capabilities for Augmented Reality Services (Release 18). An anchor is a virtual element for which its position, orientation, scale and other properties are expressed in the trackable space defined by the trackable. A virtual asset's position, orientation, scale and other properties are expressed in relation to an anchor. A trackable is a real-world object that can be tracked by the XR runtime. Each trackable provides a local reference space, also known as a trackable space, in which an anchor can be expressed. An XR Space is a frame of reference in which 3D coordinates are expressed. An example of Anchor, Trackable and XR Space are illustrated in FIG. 1, which includes an illustration of a trackable 102, an anchor 104 and a virtual asset 106.

**SUMMARY**

A method according to some embodiments comprises: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref'; and communicating the third coordinate transform and an identifier of the second node to a renderer associated with the auxiliary graph.

An apparatus according to some embodiments comprises one or more processors configured to perform at least: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref'; and communicating the third coordinate transform and an identifier of the second node to a renderer associated with the auxiliary graph.

A computer-readable medium according to some embodiments stores instructions for performing a method comprising: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref'; and communicating the third coordinate transform and an identifier of the second node to a renderer associated with the auxiliary graph.

In some embodiments, the third coordinate transform and the identifier of the second node are communicated through a configuration method of an application programming interface.

Some embodiments further include: determining, by the renderer associated with the auxiliary graph, a fourth coordinate transform, $P_B^{,Bref'}$, between the third coordinate system, Bref', and a fourth coordinate system, B', the fourth coordinate system being a global coordinate system of the auxiliary graph; and based on the third and fourth coordinate transforms, determining a fifth coordinate transform, $P_B^{,B}$, between the first coordinate system and the fourth coordinate system.

Some embodiments further include: obtaining, by the renderer associated with the auxiliary graph, a pose of at least one mapped node or trackable in the first coordinate system, B; transforming the pose into the fourth coordinate system, B', using the fifth coordinate transform; and rendering at least a portion of the auxiliary graph using the transformed pose.

In some embodiments, the pose of the mapped node or trackable is provided through a configuration method of an application programming interface.

Some embodiments further include selecting the first node in the main graph, wherein the first node is selected to be a camera node.

Some embodiments further include communicating an identifier of the second node to the renderer associated with the auxiliary graph.

In some embodiments, the renderer associated with the auxiliary graph is an audio renderer.

Some embodiments further provide a list of trackable identifiers to the renderer associated with the auxiliary graph.

In some embodiments, an updated pose of at least one mapped node or trackable is provided periodically or in response to a predefined event to the renderer associated with the auxiliary graph.

In some embodiments, the updated pose of the mapped node or trackable is provided through an update method of an application programming interface.

In some embodiments, the updated pose is provided in the first coordinate system, B, and the renderer associated with the auxiliary graph transforms the pose into the fourth coordinate system, B', using the fifth coordinate transform.

Some embodiments further include rendering at least a portion of the auxiliary graph using the transformed updated pose.

## BRIEF DESCRIPTION OF THE DRAWINGS

FIG. 1 illustrates an extended reality (XR) space for an augmented reality (AR) application, including an anchor, a trackable, and a virtual asset.

FIG. 2 illustrates an MPEG node mapping extension for the synchronization of visual and audio graphs.

FIG. 3 is a flow diagram illustrating a configuration phase process performed for each external graph according to some embodiments.

FIG. 4 schematically illustrates spatial relationships between two graphs using the node mapping extension according to some embodiments.

FIG. 5 schematically illustrates spatial transformation determination for graph alignment according to some embodiments.

FIG. 6 schematically illustrates graph synchronization using Trackable, Anchor and node mapping in a hierarchical arrangement according to some embodiments.

FIG. 7 schematically illustrates graph synchronization using Trackable, Anchor and node mapping in a non-hierarchical arrangement according to some embodiments.

FIG. 8 is a flow diagram illustrating a runtime phase method performed for each external graph according to some embodiments.

FIG. 9 is a flow diagram of a method of spatial synchronization between graphs as performed in some embodiments.

FIG. 10 is a functional block diagram of an apparatus on which embodiments described herein may be implemented. As an example, a renderer of a main graph and/or an auxiliary graph may be implemented on an apparatus as shown in FIG. 10.

## DETAILED DESCRIPTION

*Overview of Graph Synchronization Support in MPEG-I Scene Description*

In the framework of the MPEG-I Scene Description, a generic application programming interface (API), called render control API (summarized in Table 2), and a node mapping glTF extension (summarized in Table 1) have been introduced in the m66705 contribution (MPEG-I WG3 m66705, generic API for Presentation Engine, January 2024) in an attempt to provide time and spatial synchronizations of external components/graphs with the main graph. FIG. 2 illustrates an example use of such an extension to provide for synchronization between a main graph 202, represented here by a virtual car, and an auxiliary graph 204. In an example, the main graph 202 may be associated with a visual renderer, while the auxiliary graph 204 may be associated with an audio renderer. For example, different nodes 206, 208, 210 of the auxiliary graph may represent different audio sources, and it may be desirable for those different audio sources to be coordinated with different features of the main graph 202.

Table1: Semantics of the MPEG node mapping glTF extension

| Name | Type | Default | Usage | Description |
|---|---|---|---|---|
| mappings | array(object) | | M | An array of mappings associated with the containing node. |
| Role | string | 'urn:mpeg :sd:role:de fault" | O | An identifier of the role associated with this mapping. The role may for instance be "urn:mpeg:sd:role:audio-renderer" to indicate that the component is an audio renderer. |
| source | number | N/A | M | The index in the MPEG_media that provides the media resource that contains the mapped element. |
| referenceId | number | N/A | M | An identifier of the element in the referenced resource. |
| transform | array(number) | Identity | O | A 4x4 matrix that supplies the transform used to align the referenced element to the current node. |
| supportsInteractivity | boolean | false | O | Indicates if interactivity actions applied to the node should be exposed if an API is made available to the Presentation Engine by the renderer of the resource. |

Table 2: Render control API

| Method | Description |
|---|---|
| init() | Initializes the external renderer by providing the related media source information and their corresponding buffers. It also establishes a session between the Presentation Engine and the external renderer.<br>The inputs to this method call should be:<br>• A media source object that contains a handler to the buffer(s), where the source media will be made available by the MAF. A description of the media source and the contents of each buffer shall also be provided. |
| configure() | Configures the external renderer to establish an initial alignment and synchronization between the Presentation Engine and the external renderer. The parameters to this method may include:<br>• A mapping between the initial timestamp of the common Presentation Engine timeline and that of the media associated with the external renderer. It also provides information about the clock rate of the Presentation Engine<br>• A list of mapped nodes in the source media rendered by the external renderer. This list shall at least contain one object with a mapping to the main camera of the main scene description. For audio renderers, this may be the audio listener. The information is provided by the MPEG_node_mapping extension in the scene description document. It should also provide the initial position and transformation of the mapped nodes after applying the transformations associated with these node mappings<br>• A description of the scene bounding box using the glTF 2.0 spatial coordinate system. The external renderer uses this information to establish a spatial alignment between the scene coordinate system and the coordinate system that is used by the source media. The external renderer may align the bounding box of the scene to that of its media stream, which establishes the transformation that needs to be applied to all spatial coordinates exchanged over the API, in order to determine the corresponding coordinates in the coordinate system of the media stream.<br>• A list of tracked AR anchors that may be used by the external renderer. |

(continued)

| Method | Description |
|---|---|
| | The external renderer may then subscribe for updates to specific aligned nodes or it may specifically ask for current state for these nodes, using the referenceId.<br>NOTE: all exchanges over this API are based on the scene (glTF2.0) coordinate system. It is the responsibility of the external renderer to convert into their own coordinate system. The Presentation Engine does not consider any other coordinate systems other than the one established by the scene description. |
| start()<br>pause()<br>resume()<br>stop() | Allows the Presentation Engine to control the playback of selected media sources associated with the external renderer for interactivity purposes. |
| update() | Used by the Presentation Engine to update node positions and orientations for which there is a mapping with the external renderer. Updates may result from received scene updates, user interactions, animations, physics simulations, or any other events. |

| Method | Description |
|---|---|
| | The parameters passed to this method are an array of objects consisting of:<br>• The referenceId of the node to which this update applies<br>• The transform matrix that sets the current pose of the tracked object after applying the transform operation as described by the corresponding MPEG_node_mapping. Any further adjustments need to be applied by the external renderer to align with its internal coordinate system. |
| updateGraph() | The Presentation Engine uses the updateGraph function to add, update, or remove a set of nodes to the internal representation of the scene that is maintained by the external renderer. Only nodes that have a mapping with the external renderer can be passed through this method<br>The parameters to this method are an array of objects that include:<br>• The graph operation: ADD, REMOVE, UPDATE<br>• For ADD: the referenceId and the initialization information for the associated media data to the object that is to be added<br>• For REMOVE: the referenceId of the object to be removed.<br>• For UPDATE: the referenceId of the object to be updated, as well as a dictionary of attributes and their update values. |
| registerCallback() | The Presentation Engine may provide a callback function to the external renderer to allow it to query the status of certain parameters at any time. This may for example include asking for the current user pose.<br>The Presentation Engine shall register a callback function whenever possible. |

*Issues Addressed in Some Embodiments*

The features of a render control API and a node mapping glTF extension are not currently well developed. The current version does not define how the spatial synchronization is achieved between the main graph having the node mapping extension of Table 1 and the external graphs. As one example, it is not clear how a bounding box can be used forXR Space alignment in the configure() method. In another example, it is not clear how a simple list of Anchors can be used to place virtual content at the same place for the main graph and all the external graphs in the configureQ method. In a further example, it is not clear how to compute the transformation matrix in the update() method to maintain the spatial synchronization between the main graph and the external graphs.

Example embodiments provide a method and apparatus to synchronize spatially several external graphs with a main graph composing an extended Reality (XR) application. Example embodiments further provide a configuration for a render control API and node mapping glTF extension accordingly. Some embodiments may be described as including a configuration phase and a runtime phase.

*Example Configuration Phase*

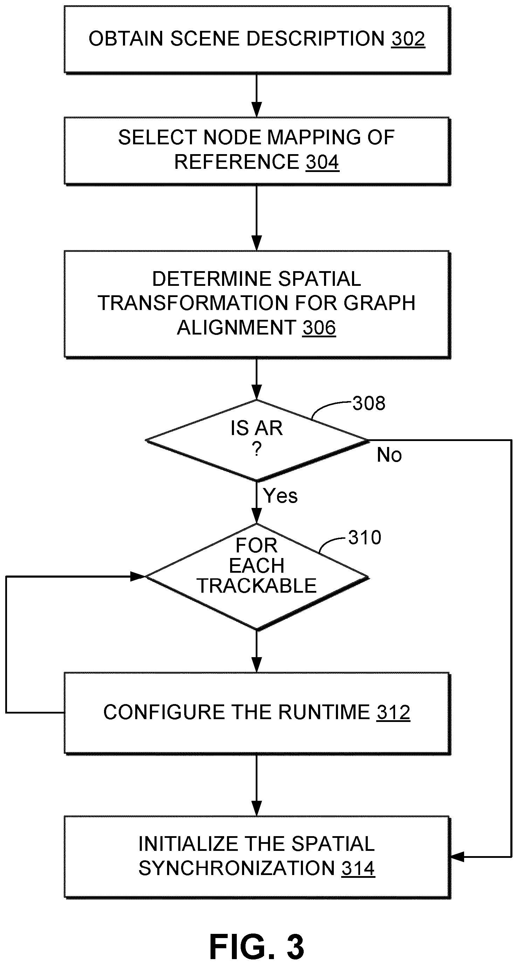

In an example embodiment, a configuration phase is performed in response to a new XR scene description being received by the device. This phase may include a process as illustrated in FIG. 3, which may be performed for each external graph. In an example configuration process, a scene description file is obtained (302). Selection of the node mapping of reference for the spatial synchronization is performed (304). A determination is made (306) of the spatial transformation for the alignment of the XR Space between the graphs. If the scene is an AR scene (308), then for each trackable (310), configuration of the XR Runtime is performed (312). Subsequently, the spatial synchronization between the graphs is initialized (314).

In some embodiments, the selection of the node mapping of the reference may be performed as follows. The MPEG node mapping glTF extension may be added to several nodes of the main graph. When building the graphs, the content creator may ensure a spatial consistency between the nodes of the main graph having the node mapping glTF extension and the corresponding nodes of the external graph identified by the referenceId parameter of the node mapping glTF extension.

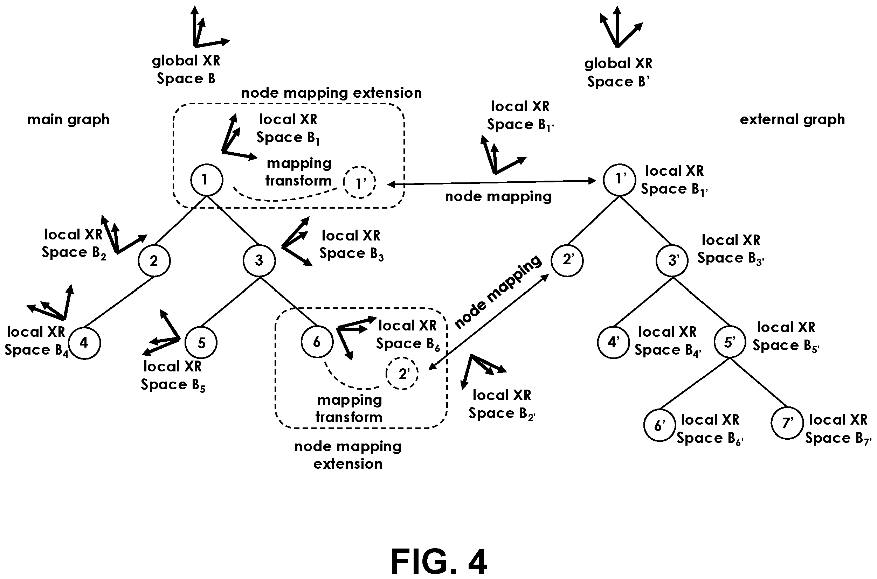

The main graph and the external graphs have a dedicated global XR Space. Each node of a graph has translation, rotation, scale (TRS) parameters which defines a local XR Space with respect to its parent node, as illustrated in FIG. 4.

In an example embodiment, where a nested node of the external graph is mapped, all its parent nodes are also mapped to ensure that the whole hierarchy is spatially synchronized.

In the configuration phase, as noted above, a selection (304) is made of the node mapping which will be used as a reference for the spatial synchronization between all the defined node mappings for each external graph. The selection may be made in different ways in different embodiments. In one embodiment, the node mapping of reference may be chosen randomly between all the node mappings. In a second embodiment, the node mapping of reference may be chosen randomly between all the node mappings with the root nodes of the external graph. In a third embodiment, the content creator may identify the node mapping of reference by including a parameter such as a Boolean isReference-Nodemapping in the semantics of the MPEG node mapping glTF extension, as described below. This choice may be guided by spatial accuracy criteria (e.g., the 3D vertices of the related node geometry have higher precision than the other mapped nodes). In a fourth embodiment, the node mapping of reference is the camera node, as the spatial consistency of the camera between the graphs is desirable for the rendering.

In some embodiments, the determination of the spatial transformation for graph alignment may be performed as follows. This portion of the configuration phase may correspond to the determination of the spatial transformation between the global XR Space of the main graph and the global Space of each external graph (306). This spatial transformation corresponds to and may be described by a matrix $P_B{}^{,B}$ which transforms the input 3D coordinates expressed in the global XR Space B of the main graph to 3D coordinates expressed in the global Space B' of the external graph through equation (1):

$$(x',y',z')_{B'} = P_B{}^{,B} (x,y,z)_B \tag{1}$$

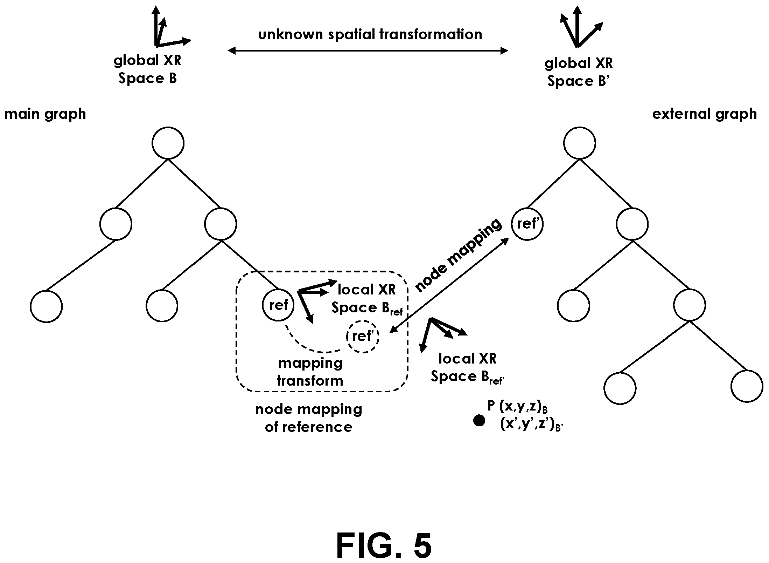

Based on the node mapping extension, the calculation of this matrix $P_B{}^{,B}$ can be performed. FIG. 5 schematically illustrates this calculation process. As shown in FIG. 5, the node *ref* of the main graph having the node mapping of reference (selected as described above), defining a local XR Space $B_{ref}$, and a mapping transform matrix $P_{Bref}{}^{Bref'}$ (the transform parameter of the node mapping glTF extension of Table 1). The node *ref'* of the external graph is referenced by the referenceId parameter of the node mapping glTF extension of Table 1.

For any point P:

$$(x,y,z)_B = P_B{}^{Bref'} (x_{ref}',y_{ref}',z_{ref}')_{Bref'} = P_B{}^{Bref} P_{Bref}{}^{Bref'} (x_{ref}',y_{ref}',z_{ref}')_{Bref'} \tag{2}$$

$$(x',y',z')_{B'} = P_{B'}{}^{Bref'} (x_{ref}',y_{ref}',z_{ref}')_{Bref'} \tag{3}$$

Then, with (2) and (3):

$$(x',y',z')_{B'} = P_{B'}{}^{Bref'} [P_{Bref}{}^{Bref'}]^{-1} [P_B{}^{Bref}]^{-1} (x,y,z)_B \tag{4}$$

And finally, with (1) and (4):

$$P_B{}^{,B} = P_{B'}{}^{Bref'} [P_{Bref}{}^{Bref'}]^{-1} [P_B{}^{Bref}]^{-1} \tag{5}$$

With reference to formula (5), it may be noted that, absent an exchange of information, a renderer of the main graph does not know the matrix $P_B{}^{,Bref'}$, which defines a coordinate transform between the coordinate system (B') of the auxiliary graph and the coordinate system (Bref') of a node in the auxiliary graph. Conversely, absent an exchange of information, a renderer of the external graph does not know the matrix product $[P_{Bref}{}^{Bref'}]^{-1}$ $[P_B{}^{Bref}]^{-1}$ , nor does it know which node *ref'* of the external graph is referenced by the referenceId parameter of the node mapping of reference. In an example embodiment, this matrix product and the referenceId of reference (e.g. the identifier of the node of the external graph corresponding to the selected node mapping of reference of the main graph), known by the renderer of the main graph, are provided to the external graph in the configureQ method of the render control API.

For a sake of clarity, this matrix product may be called alignment matrix $P_{align}$

$$P_{align} = [P_{Bref}{}^{Bref'}]^{-1} [P_B{}^{Bref}]^{-1} \tag{6}$$

In an example embodiment, after receiving the alignment matrix $P_{align}$ and the referenceId of reference, a renderer of the external graph may calculate and store the spatial transformation matrix $P_{B'}{}^{B}$ which will be used to express the poses in the global Space B' of the external graph using the formula (1).

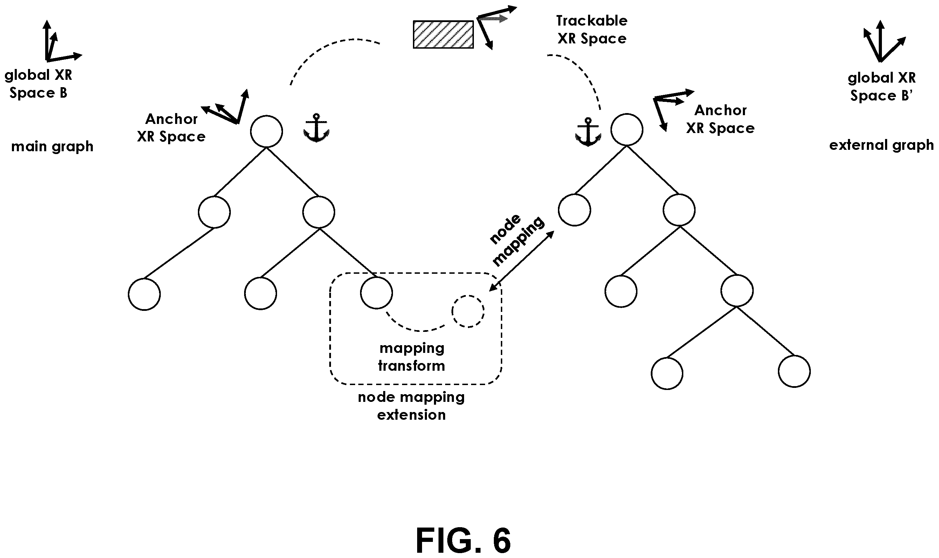

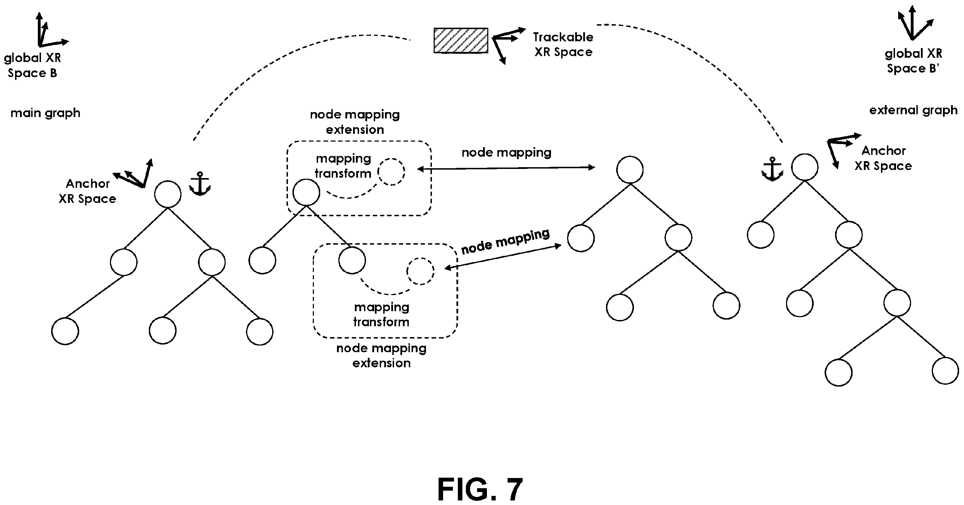

In some embodiments, configuration of the XR runtime for each trackable may be performed as follows. This process may be performed for AR applications for which Trackables and Anchors are defined in the semantics of the main graph and the external graphs. In some embodiments, a hierarchical combination of shared Trackable, Anchor and node mapping are supported, as shown in FIG. 6. In some embodiments, a non-hierarchical combination of shared Trackable, Anchor and node mapping are supported, as shown in FIG. 7.

For each defined Trackable, the XR Runtime of the device may be configured to be able to detect and track these Trackables during the runtime phase. This configuration may use the Khronos OpenXR API. For example, the floor may be set as trackable by using xrCreateReferenceSpaceQ with the XR_REFERENCE_SPACE_TYPE_STAGE value of the XrReferenceSpaceType enum. A trackable related to an arbitrary freespace point may be set in the user real environment by using xrCreateSpatialAnchorFB() and xrCreateSpatialAnchorMSFT(). A 2D marker may be set as a trackable by using xrCreateMarkerSpaceVARJOQ. These methods create and return a handle of the Trackable XR Space.

In some embodiments, an initialization of the spatial synchronization between the graphs may be performed as follows. This process initializes the spatial synchronization between the main graph and the external graphs. It also provides to the external graphs the initial poses of the nodes of the external graph identified by the referenceId parameter of the node mapping glTF extension (called 'mapped' nodes).

As the configuration of the XR Runtime for each Trackable for AR application has only been done in the previous step, it may be possible that the initial poses of the Trackables are not yet available. In the contrary case, this process also provides the initial poses of the Trackables

For each mapped node, the pose may be expressed in the global XR Space B of the main graph by using the formula (2) with $(x_{ref'}, y_{ref'}, z_{ref'})_{Bref'}$ = (0,0,0) (i.e., the origin of the mapped node expressed in the $B_{ref'}$ XRSpace).

In some embodiments, to get the pose of a Trackable, the Khronos OpenXR xrLocateSpaceQ method may be used for retrieving the XrPosef information (position and orientation of the origin of the Trackable XR Space) from the XrSpaceLocation structure with the following input parameters: the XR space of the Trackable to locate, the base/parent space (e.g., the global XR Space B of the main graph) in which the pose is expressed, and the time for which the pose is provided (e.g., the current time).

All these initial poses are calculated and expressed in the global XR Space B of the main graph before calling the configureQ method of the render control API. These initial poses are then converted to the related global XR Space B' by each external graph by using the formula (1) of with the spatial transformation matrix $P_{B'}{}^{B}$ calculated from equations (5) and (6) based on the provided referenceId of reference (the identifier of the node of the external graph corresponding to the selected node mapping of reference of the main graph).

*Example Runtime Phase*

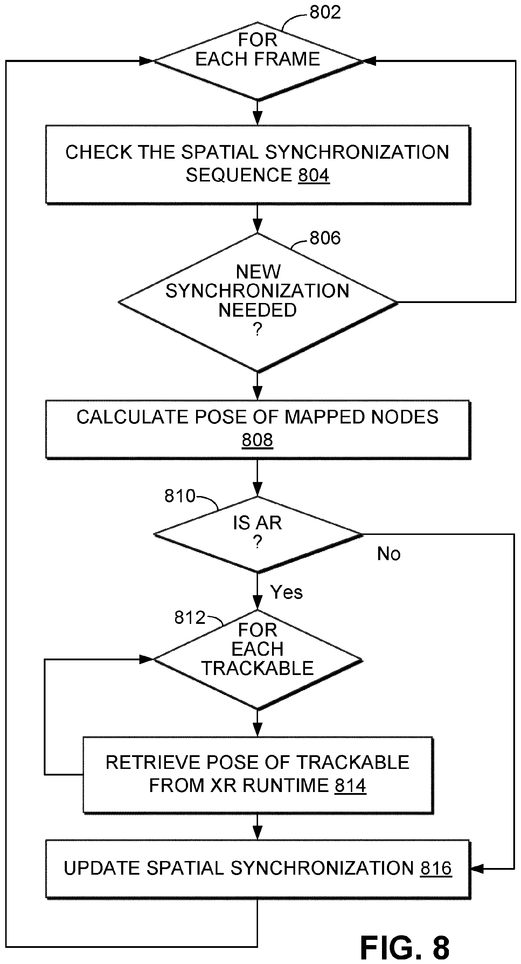

In an example embodiment, the runtime phase is performed for each frame (e.g, for each rendering loop). In some embodiments, this phase may be performed as illustrated in FIG. 8. The method of FIG. 8 may be performed for each external graph. For each frame (802), a check is performed (804, 806) to determine whether a spatial synchronization update is required. If so, the pose of the mapped nodes is calculated (808). If the scene is an AR scene (810), then for each trackable (812), the pose of the trackable is retrieved (814) from the XR Runtime. The spatial synchronization of the graphs is then updated (816).

In some embodiments, a check may be performed to determine if/when to perform a spatial synchronization update. The occurrence of the synchronization update may be specified by the content creator. In some embodiments, the update may be periodic, e.g. every frames or every N frames. In some embodiments, the update may be event-based, e.g.

based on a trigger activation (e.g., visibility, proximity, collision, user input) which may be defined in the interactivity semantics of the main graph (e.g., in the MPEG_scene_interactivity, MPEG_node_interactivity gITF extensions). In some embodiments, the update may be based on a logical combination of periodic and/or event-based occurrences.

In some embodiments, these semantics are added to the semantics of the MPEG node mapping gITF extension of the mapped node of reference if identified by the content creator or in a gITF scene extension.

In some embodiments, the occurrence of the synchronization update is done for each frame and no additional semantics is provided.

In some embodiments, calculation of the pose of the mapped nodes may be performed as follows. This process is analogous to the calculation of the initial poses of the nodes of the external graph identified by the referenceId parameter of the node mapping gITF extension.

For each mapped node, the pose is updated and expressed in the global XR Space B of the main graph by using the formula (2) with $(x_{ref}', y_{ref}', z_{ref}')_{Bref'} = (0,0,0)$ (i.e., the origin of the mapped node expressed in the XRSpace $B_{ref'}$).

In some embodiments, the pose of the trackables may be retrieved as follows. This process may be performed only for AR applications for which Trackables and AR anchors are defined in the semantics of the main graph and the external graphs.

During runtime, the pose of a Trackable may vary (e.g., the prediction may be more accurate and/or the Trackable has a new pose in the user's environment). This process may be analogous to the retrieval of the Trackable poses described herein. All these Trackable poses may be expressed in the global XR Space B of the main graph.

In some embodiments, updating the spatial synchronization between graphs may be performed as follows. The poses of the mapped nodes and the Trackables have been calculated and expressed in the global XR Space B of the main graph before calling the update() method of the render control API.

These poses are then converted to the related global XR Space B' by the renderer of each external graph by using the formula (1) with the spatial transformation matrix $P_{B'}{}^{B}$ calculated from equation (5).

*Example Render Control API and the Node Mapping Semantics*

In some embodiments, a render control API may be implemented as follows.

The configureQ and the update() methods of the render control API may be configured to accommodate the spatial synchronization methods described above. A description of an example configure() method is described in Table 3. A description of an example of an example update() method is provided in Table 4.

Table 3: Example configure() method of the render control API.

| configure() | Configures the external renderer to establish an initial alignment and synchronization between the Presentation Engine and the external renderer.<br>The parameters to this method may include:<br>• A mapping between the initial timestamp of the common Presentation Engine timeline and that of the media associated with the external renderer. It also provides information about the clock rate of the Presentation Engine. |
|---|---|
| | • A list of mapped nodes in the source media rendered by the external renderer. This list contains at least one object with a mapping to the main camera of the main scene description. For audio renderers, this may be the audio listener. The information is provided by the MPEG_node_mapping extension in the scene description document.<br>• An alignment matrix $P_{align}$ as defined in formula (6) and the identifier of the node of the external graph (referenceId) used for the calculation of $P_{align}$. These two parameters are used by the external renderer to calculate the spatial transformation matrix $P_{B'}{}^{B}$ as defined in formula (5).<br>• A list of Trackable identifiers that may be used by the external renderer.<br>• Initial poses of the mapped nodes and the Trackables if already available. These initial poses are expressed in the world space of the Presentation Engine. The external renderer will then convert all these poses to its world space by using the spatial transformation matrix $P_{B'}{}^{B}$ as defined in formula (1). |
| the | The external renderer may then subscribe for updates to specific aligned nodes or it may specifically ask for current state for these nodes, using the referenceId. |
| | NOTE: all exchanges over this API are based on the scene (gITF2.0) coordinate system. It is the responsibility of the external renderer to convert into their own coordinate system. The Presentation Engine does not consider any other coordinate systems other than the one established by the scene description. |

Table 4: Example update() method of the render control API

| update() | Used by the Presentation Engine to update node positions and orientations for which there is a mapping with the external renderer. It is also used to update the poses of the Trackables. Updates may result from received scene updates, user interactions, animations, physics simulations, or any other events. The occurrence of the updates may also be periodic (for each or every N rendering loop). A logical combination of these event-based and/or periodic updates may also be supported. The occurrence of the updates may be specified in a MPEG_node_mapping gITF extension or within a gITF extension at scene level. |
|---|---|
| | The parameters passed to this method are an array of objects consisting of:<br>• The referenceld of the node or the ID of the Trackable to which this update applies<br>• The poses of the mapped nodes and the Trackables. These poses are expressed in the world space of the Presentation Engine. The external renderer will then convert all these poses to |
| | its world space by using the spatial transformation matrix $P_B{}^{,B}$ as defined in formula (1). |

In some embodiments, the node mapping semantics may be implemented as follows. The semantics of an MPEG node mapping extension (Table 5) may be configured based on a spatial synchronization method as described in the previous sections.

Table 5: Example MPEG node mapping extension.

| Name | Type | Default | Usage | Description |
|---|---|---|---|---|
| mappings | array(object) | | M | An array of mappings associated with the containing node. |
| Role | String | 'urn:mpeg:sd role:default" | O | An identifier of the role associated with this mapping. The role may for instance be 'urn:mpeg:sd:role:audio-renderer" to indicate that the component is an audio renderer. |
| isReferenceNodemapping | Boolean | false | O | A Boolean indicating of this node mapping may be used for the calculation of the spatial alignment between the SD graph and the graph of the external renderer. If no reference node mapping is provided for this mapping, the camera node may be used for the calculation of the spatial alignment. |
| EvaluationOccurrence s | array(enum) | [EVENT] | O | An array of evaluation occurrences for the synchronization defined by an Enumerator. Possible values are:<br>- ONCE: the synchronization is done once at the configuration step |

(continued)

| Name | Type | Default | Usage | Description |
|---|---|---|---|---|
| | | | | - EVENT: the synchronization is launched based on a trigger activation (e.g., visibility, proximity, collision, user input) as those defined in the MPEG_interactivity extension. The index of the trigger in the triggers array of the MPEG_interactivity extension may be provided as additional parameter of this extension<br>- N_FRAME: the synchronization is periodic every N (1, 2, ... ) rendering frames. The N value may be provided as additional parameter of this extension |
| EvaluationOccurrence Combination | String | "OR" | O | A set of logical operations to apply to the evaluation occurrences. A '#' indicates the occurrence index, '&' indicates a logical AND operation, '\|' a logical OR operation and '-' a NOT operation. Parenthesis are used to group some operations. Such a |
| **Name** | **Type** | **Default** | **Usage** | **Description** |
| | | | | syntax may give the following string: '#1&~#2\| (#3&#4)". |
| source | Number | N/A | M | The index in the MPEG_media that provides the media resource that contains the mapped element. |

(continued)

| Name | Type | Default | Usage | Description |
|------|------|---------|-------|-------------|
| referenceId | Number | N/A | M | An identifier of the element in the referenced resource. If the element of the referenced resource is a nested node, all its parent nodes need also to be mapped to ensure that its whole hierarchy of the external graph is spatially synchronized. i |
| transform | array(number ) | Identity | O | A 4x4 matrix that supplies the transformation from the XR Space of the referenced element to the XR Space of the current node. |
| supportsInteractivity | boolean | false | O | Indicates if interactivity actions applied to the node should be exposed if an API is made available to the Presentation Engine by the renderer of the resource. |
| Note: As an alternative, the evaluationOccurrences and the evaluationOccurrenceCombination parameters for each mapping may be defined in a dedicated glTF extension at the scene level. | | | | |

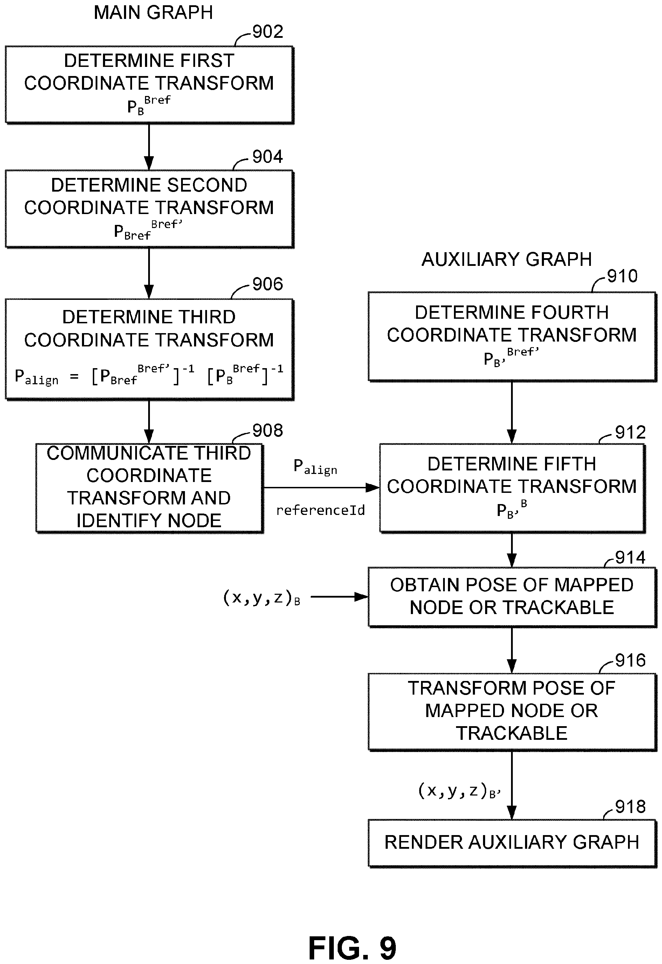

A method according to some embodiments is illustrated in FIG. 9. At 902, a first coordinate transform, $P_B^{Bref}$, is determined between a first coordinate system, B, being a global coordinate system of a main graph, and a second coordinate system, Bref, of a first node in the main graph. At 904, a second coordinate transform, $P_{Bref}^{Bref'}$, is determined between the second coordinate system, Bref, of the first node in the main graph and a third coordinate system, Bref', of a second node in an auxiliary graph. At 906, based on the first and second coordinate transforms, a third coordinate transform, $P_{align}$, is determined between the first coordinate system, B, and the third coordinate system, Bref'. At 908, the third coordinate transform and an identifier (e.g. a referenceId) of the second node are communicated, e.g. through an API, to a renderer associated with the auxiliary graph. This communication may occur during a configuration phase.

In some embodiments, at 910, a renderer associated with the auxiliary graph determines a fourth coordinate transform, $P_{B'}^{Bref'}$, between the third coordinate system, Bref', and a fourth coordinate system, B', the fourth coordinate system being a global coordinate system of the auxiliary graph. At 912, based on the third and fourth coordinate transforms, a fifth coordinate transform, $P_{B'B}$, is determined between the first coordinate system and the fourth coordinate system.

In some embodiments, at 914, the renderer associated with the auxiliary graph obtains a pose of at least one mapped node or trackable in the first coordinate system, B. At 916, the pose is transformed into the fourth coordinate system, B', using the fifth coordinate transform. At least a portion of the auxiliary graph is rendered at 918 using the transformed pose. As described in greater detail above, updated poses of nodes and/or trackables may be provided to the renderer associated with the auxiliary graph over the course of an XR session, and those poses may likewise be transformed using the fifth coordinate transform, $P_{B'B}$, and used for rendering of the auxiliary graph as appropriate.

It should be noted that where any transform is described as being communicated, determined, derived, calculated, or otherwise used, this includes communicating, determining, deriving, calculating, or otherwise using the inverse of that coordinate transform, as a coordinate transform and its inverse can be calculated from one another. For example, example embodiments would include providing the transform $[P_{align}]^{-1}$ instead of $P_{align}$ to the renderer associated with the auxiliary graph, as this provides sufficient information to provide the described transforms.

*Example system hardware.*

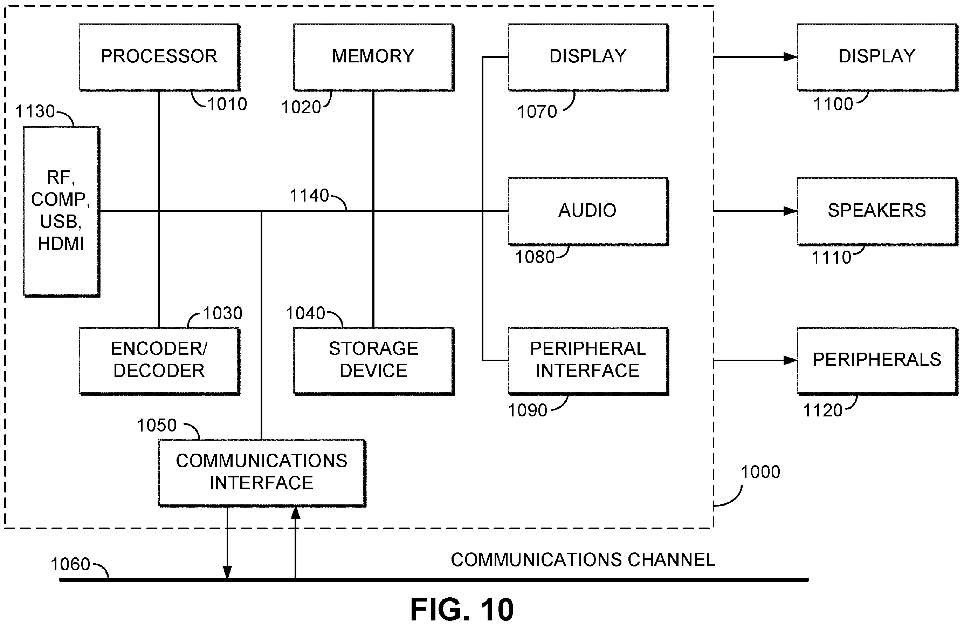

Example embodiments of an apparatus configured to implement embodiments described herein may be implemented using systems such as the system of FIG. 10. FIG. 10 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the main graph, one or more auxiliary graphs, poses, coordinate transformations, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

*Additional embodiments.*

A method according to some embodiments comprises: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref'; and communicating the third coordinate transform and an identifier of the second node to a renderer associated with the auxiliary graph.

An apparatus according to some embodiments comprises one or more processors configured to perform at least: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref' ; and communicating the third coordinate transform and an identifier of the second node to a renderer associated with the auxiliary graph.

A computer-readable medium according to some embodiments stores instructions for performing a method comprising: determining a first coordinate transform, $P_B^{Bref}$, between a first coordinate system, B, being a global coordinate system of a main graph, and a second coordinate system, Bref, of a first node in the main graph; determining a second coordinate transform, $P_{Bref}^{Bref'}$, between the second coordinate system, Bref, of the first node in the main graph and a third coordinate system, Bref', of a second node in an auxiliary graph; based on the first and second coordinate transforms, determining a third coordinate transform, $P_{align}$, between the first coordinate system, B, and the third coordinate system, Bref' ; and communicating the third coordinate transform and an identifier of the second node to a renderer associated with the auxiliary graph.

In some embodiments, the third coordinate transform and the identifier of the second node are communicated through a configuration method of an application programming interface.

Some embodiments further include: determining, by the renderer associated with the auxiliary graph, a fourth coordinate transform, $P_{B'}^{Bref'}$, between the third coordinate system, Bref', and a fourth coordinate system, B', the fourth coordinate system being a global coordinate system of the auxiliary graph; and based on the third and fourth coordinate transforms, determining a fifth coordinate transform, $P_{B'}^{B}$, between the first coordinate system and the fourth coordinate system.

Some embodiments further include: obtaining, by the renderer associated with the auxiliary graph, a pose of at least one mapped node or trackable in the first coordinate system, B; transforming the pose into the fourth coordinate system, B', using the fifth coordinate transform; and rendering at least a portion of the auxiliary graph using the transformed pose.

In some embodiments, the pose of the mapped node or trackable is provided through a configuration method of an application programming interface.

Some embodiments further include selecting the first node in the main graph, wherein the first node is selected to be a camera node.

In some embodiments, the renderer associated with the auxiliary graph is an audio renderer.

Some embodiments further provide a list of trackable identifiers to the renderer associated with the auxiliary graph.

In some embodiments, an updated pose of at least one mapped node or trackable is provided periodically or in response to a predefined event to the renderer associated with the auxiliary graph.

In some embodiments, the updated pose of the mapped node or trackable is provided through an update method of an application programming interface.

In some embodiments, the updated pose is provided in the first coordinate system, B, and the renderer associated with the auxiliary graph transforms the pose into the fourth coordinate system, B', using the fifth coordinate transform.

Some embodiments further include rendering at least a portion of the auxiliary graph using the transformed updated pose.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

A bitstream or signal that includes one or more of the described syntax elements, or variations thereof.

A bitstream or signal that includes syntax conveying information generated according to any of the embodiments described.

Creating and/or transmitting and/or receiving and/or decoding a bitstream or signal that includes one or more of the described syntax elements, or variations thereof.

Creating and/or transmitting and/or receiving and/or decoding according to any of the embodiments described.

A method, process, apparatus, medium storing instructions, medium storing data, or signal according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   determining a first coordinate transform, $P_B^{Bref}$, between a first coordinate system, B, being a global coordinate system of a main graph, and a second coordinate system, Bref, of a first node in the main graph;
   determining a second coordinate transform, $P_{Bref}^{Bref'}$, between the second coordinate system, Bref, of the first node in the main graph and a third coordinate system, Bref', of a second node in an auxiliary graph;
   based on the first and second coordinate transforms, determining a third coordinate transform, $P_{align}$, between the first coordinate system, B, and the third coordinate system, Bref' ; and
   communicating the third coordinate transform and an identifier of the second node to a renderer associated with the auxiliary graph.

2. An apparatus comprising one or more processors configured to perform at least:

   determining a first coordinate transform, $P_B^{Bref}$, between a first coordinate system, B, being a global coordinate system of a main graph, and a second coordinate system, Bref, of a first node in the main graph;
   determining a second coordinate transform, $P_{Bref}^{Bref'}$, between the second coordinate system, Bref, of the first node in the main graph and a third coordinate system, Bref', of a second node in an auxiliary graph;
   based on the first and second coordinate transforms, determining a third coordinate transform, $P_{align}$, between the first coordinate system, B, and the third coordinate system, Bref' ; and
   communicating the third coordinate transform and an identifier of the second node to a renderer associated with the auxiliary graph.

3. A computer-readable medium storing instructions for performing a method comprising:

   determining a first coordinate transform, $P_B^{Bref}$, between a first coordinate system, B, being a global coordinate system of a main graph, and a second coordinate system, Bref, of a first node in the main graph;
   determining a second coordinate transform, $P_{Bref}^{Bref'}$, between the second coordinate system, Bref, of the first node in the main graph and a third coordinate system, Bref', of a second node in an auxiliary graph;
   based on the first and second coordinate transforms, determining a third coordinate transform, $P_{align}$, between the first coordinate system, B, and the third coordinate system, Bref'; and
   communicating the third coordinate transform and an identifier of the second node to a renderer associated with the auxiliary graph.

4. The method of claim 1, the apparatus of claim 2, or the computer-readable medium of claim 3, wherein the third coordinate transform and the identifier of the second node are communicated through a configuration method of an application programming interface.

5. The method of claim 1 or claim 4 as it depends from claim 1, the apparatus of claim 2 or claim 4 as it depends from claim 2, or the computer-readable medium of claim 3 or claim 4 as it depends from claim 3, further comprising:

   determining, by the renderer associated with the auxiliary graph, a fourth coordinate transform, $P_{B'}^{Bref'}$, between the third coordinate system, Bref', and a fourth coordinate system, B', the fourth coordinate system being a global coordinate system of the auxiliary graph; and
   based on the third and fourth coordinate transforms, determining a fifth coordinate transform, $P_{B'}^{B}$, between the first coordinate system and the fourth coordinate system.

6. The method of claim 5 as it depends from claim 1, the apparatus of claim 5 as it depends from claim 2, or the computer-readable medium of claim 5 as it depends from claim 3, further comprising:

obtaining, by the renderer associated with the auxiliary graph, a pose of at least one mapped node or trackable in the first coordinate system, B;
transforming the pose into the fourth coordinate system, B', using the fifth coordinate transform; and
rendering at least a portion of the auxiliary graph using the transformed pose.

7. The method of claim 6 as it depends from claim 1, the apparatus of claim 6 as it depends from claim 2, or the computer-readable medium of claim 6 as it depends from claim 3, wherein the pose of the mapped node or trackable is provided through a configuration method of an application programming interface.

8. The method of claim 1 or claims 4-7 as they depend from claim 1, the apparatus of claim 2 or claims 4-7 as they depend from claim 2, or the computer-readable medium of claim 3 or claims 4-7 as they depend from claim 3, further comprising selecting the first node in the main graph, wherein the first node is selected to be a camera node.

9. The method of claim 1 or claims 4-8 as they depend from claim 1, the apparatus of claim 2 or claims 4-8 as they depend from claim 2, or the computer-readable medium of claim 3 or claims 4-9 as they depend from claim 3, wherein the renderer associated with the auxiliary graph is an audio renderer.

10. The method of claim 1 or claims 4-9 as they depend from claim 1, the apparatus of claim 2 or claims 4-9 as they depend from claim 2, or the computer-readable medium of claim 3 or claims 4-9 as they depend from claim 3, further comprising providing a list of trackable identifiers to the renderer associated with the auxiliary graph.

11. The method of claim 1 or claims 4-10 as they depend from claim 1, the apparatus of claim 2 or claims 4-10 as they depend from claim 2, or the computer-readable medium of claim 3 or claims 4-10 as they depend from claim 3, wherein an updated pose of at least one mapped node or trackable is provided periodically or in response to a predefined event to the renderer associated with the auxiliary graph.

12. The method of claim 11 as it depends from claim 1, the apparatus of claim 11 as it depends from claim 2, or the computer-readable medium of claim 11 as it depends from claim 3, wherein the updated pose of the mapped node or trackable is provided through an update method of an application programming interface.

13. The method of claim 11 or 12 as they depend from claim 1, the apparatus of claim 11 or 12 as they depend from claim 2, or the computer-readable medium of claim 11 or 12 as they depend from claim 3, wherein the updated pose is provided in the first coordinate system, B, and wherein the renderer associated with the auxiliary graph transforms the updated pose into the fourth coordinate system, B', using the fifth coordinate transform.

14. The method of claim 1 or claims 4-13 as they depend from claim 1, the apparatus of claim 2 or claims 4-13 as they depend from claim 2, or the computer-readable medium of claim 3 or claims 4-13 as they depend from claim 3, further comprising rendering at least a portion of the auxiliary graph using the transformed updated pose.

**FIG. 1**

**FIG. 2**

```
┌─────────────────────────────────────┐
│  OBTAIN SCENE DESCRIPTION 302        │
└─────────────────────────────────────┘
                  │
                  ▼
┌─────────────────────────────────────┐
│  SELECT NODE MAPPING OF              │
│  REFERENCE 304                       │
└─────────────────────────────────────┘
                  │
                  ▼
┌─────────────────────────────────────┐
│  DETERMINE SPATIAL                   │
│  TRANSFORMATION FOR GRAPH            │
│  ALIGNMENT 306                       │
└─────────────────────────────────────┘
                  │
                  ▼
            ╱◇╲  308
         IS AR            No
            ?      ───────────┐
          ╲◇╱                 │
            │ Yes             │
            ▼                 │
         ╱◇╲  310            │
     FOR                      │
  ◄─ EACH                     │
     TRACKABLE                │
          ╲◇╱                 │
            │                 │
            ▼                 │
┌─────────────────────────────────────┐
│  CONFIGURE THE RUNTIME 312           │
└─────────────────────────────────────┘
                  │                  │
                  ▼                  │
┌─────────────────────────────────────┐
│  INITIALIZE THE SPATIAL        ◄─────┘
│  SYNCHRONIZATION 314                 │
└─────────────────────────────────────┘
```

# FIG. 3

global XR
Space B

node mapping extension

main graph

local XR
Space $B_1$

global XR
Space B'

local XR
Space $B_{1'}$

external graph

local XR
Space $B_{1'}$

mapping
transform

node mapping

local XR
Space $B_2$

local XR
Space $B_3$

local XR
Space $B_{3'}$

local XR
Space $B_4$

local XR
Space $B_5$

local XR
Space $B_6$

node mapping

local XR
Space $B_{2'}$

local XR
Space $B_{4'}$

local XR
Space $B_{5'}$

mapping
transform

local XR
Space $B_{2'}$

local XR
Space $B_{6'}$

local XR
Space $B_{7'}$

node mapping
extension

FIG. 4

EP 4 618 028 A1

**FIG. 5**

EP 4 618 028 A1

FIG. 6

FIG. 7

```
                                    ┌─802
                               ╱    FOR    ╲
                              ╱  EACH FRAME  ╲
                               ╲            ╱
                                ╲          ╱

                    ┌──────────────────────────────────┐
                    │  CHECK THE SPATIAL SYNCHRONIZATION │
                    │         SEQUENCE 804              │
                    └──────────────────────────────────┘

                                    ┌─806
                               ╱     NEW      ╲
                              ╱  SYNCHRONIZATION ╲
                              ╲     NEEDED       ╱
                               ╲      ?        ╱

                    ┌──────────────────────────────────┐
                    │  CALCULATE POSE OF MAPPED NODES   │
                    │              808                  │
                    └──────────────────────────────────┘

                      810─╲     IS AR     ╱
                           ╲      ?      ╱        No
                            ╲          ╱

                                   Yes

                      812─╲    FOR    ╱
                          ╱  EACH    ╲
                          ╲ TRACKABLE ╱

                    ┌──────────────────────────────────┐
                    │   RETRIEVE POSE OF TRACKABLE      │
                    │   FROM XR RUNTIME 814             │
                    └──────────────────────────────────┘

                    ┌──────────────────────────────────┐
                    │ UPDATE SPATIAL SYNCHRONIZATION 816 │
                    └──────────────────────────────────┘
```

# FIG. 8

MAIN GRAPH

902
DETERMINE FIRST
COORDINATE TRANSFORM
$P_B^{Bref}$

904
DETERMINE SECOND
COORDINATE TRANSFORM
$P_{Bref}^{Bref'}$

906
DETERMINE THIRD
COORDINATE TRANSFORM

$P_{align} = [P_{Bref}^{Bref'}]^{-1} [P_B^{Bref}]^{-1}$

908
COMMUNICATE THIRD
COORDINATE
TRANSFORM AND
IDENTIFY NODE

AUXILIARY GRAPH
910
DETERMINE FOURTH
COORDINATE TRANSFORM
$P_{B'}^{Bref'}$

$P_{align}$

referenceId

912
DETERMINE FIFTH
COORDINATE TRANSFORM
$P_{B'}^{B}$

$(x,y,z)_B$

914
OBTAIN POSE OF MAPPED
NODE OR TRACKABLE

916
TRANSFORM POSE OF
MAPPED NODE OR
TRACKABLE

$(x,y,z)_{B'}$

918
RENDER AUXILIARY GRAPH

# FIG. 9

FIG. 10

DISPLAY 1100

SPEAKERS 1110

PERIPHERALS 1120

DISPLAY 1070

AUDIO 1080

PERIPHERAL INTERFACE 1090

MEMORY 1020

1140

STORAGE DEVICE 1040

PROCESSOR 1010

ENCODER/ DECODER 1030

COMMUNICATIONS INTERFACE 1050

RF, COMP, USB, HDMI 1130

1000

COMMUNICATIONS CHANNEL

1060

| Europäisches Patentamt<br>European Patent Office<br>Office européen des brevets | **EUROPEAN SEARCH REPORT** | **Application Number**<br>EP 24 30 5384 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IMED BOUAZIZI ET AL: "[SD] Generic API for Presentation Engine", 145. MPEG MEETING; 20240122 - 20240126; ONLINE; (MOTION PICTURE EXPERT GROUP OR ISO/IEC JTC1/SC29/WG11), , no. m66705 24 January 2024 (2024-01-24), XP030316267, Retrieved from the Internet: URL:https://dms.mpeg.expert/doc_end_user/d ocuments/145_OnLine/wg11/m66705-v2-m66705. zip m66705_GenericAPI_v2.docx [retrieved on 2024-01-24] * section 1 section 2 section 3 * | 1-14 | INV.<br>G06T19/00<br>H04N21/44 |
| A | IMED BOUAZIZI ET AL: "[SD] Establishing a Mapping between Audio and MPEG-I Scenes", 144. MPEG MEETING; 20231016 - 20231020; HANNOVER; (MOTION PICTURE EXPERT GROUP OR ISO/IEC JTC1/SC29/WG11), , no. m65378 11 October 2023 (2023-10-11), XP030312950, Retrieved from the Internet: URL:https://dms.mpeg.expert/doc_end_user/d ocuments/144_Hannover/wg11/m65378-v1-m6537 8.zip m65378_audio_mapping.docx [retrieved on 2023-10-11] * sections 1 and 2 * | 1-14 | |
| | ----- | | TECHNICAL FIELDS SEARCHED (IPC)<br>G06T<br>H04N |
| | -/-- | | |

The present search report has been drawn up for all claims

| Place of search | Date of completion of the search | Examiner |
|---|---|---|
| The Hague | 24 June 2024 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

| | Europäisches Patentamt<br>European Patent Office<br>Office européen des brevets | **EUROPEAN SEARCH REPORT** | **Application Number**<br>EP 24 30 5384 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | IMED BOUAZIZI ET AL: "[SD] APIs for driving external renderers",<br>144. MPEG MEETING; 20231016 - 20231020; HANNOVER; (MOTION PICTURE EXPERT GROUP OR ISO/IEC JTC1/SC29/WG11),<br>,<br>no. m65395<br>11 October 2023 (2023-10-11), XP030312978,<br>Retrieved from the Internet:<br>URL:https://dms.mpeg.expert/doc_end_user/d ocuments/144_Hannover/wg11/m65395-v1-m6569 5.zip m65695_audio_api.docx<br>[retrieved on 2023-10-11]<br>* sections 1 and 2 * | 1-14 | |
| A | "Information technology - Runtime 3D asset delivery format - Khronos glTF(TM) 2.0",<br>ISO/IEC 12113:2022, IEC, 3, RUE DE VAREMBÉ, PO BOX 131, CH-1211 GENEVA 20, SWITZERLAND<br>,<br>26 July 2022 (2022-07-26), pages 1-189,<br>XP082037307,<br>Retrieved from the Internet:<br>URL:https://api.iec.ch/harmonized/publicat ions/download/3038945<br>[retrieved on 2022-07-26]<br>* chapter 2 * | 1-14 | |

TECHNICAL FIELDS
SEARCHED (IPC)

-/--

The present search report has been drawn up for all claims

| Place of search | Date of completion of the search | Examiner |
|---|---|---|
| The Hague | 24 June 2024 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

page 2 of 3

Europäisches
Patentamt
European
Patent Office
Office européen
des brevets

**EUROPEAN SEARCH REPORT**

**Application Number**

EP 24 30 5384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Draft Text of ISO/IEC 23090-14 2nd edition Scene description", 144. MPEG MEETING; 20231016 - 20231020; HANNOVER; (MOTION PICTURE EXPERT GROUP OR ISO/IEC JTC1/SC29/WG11), , no. n23220 19 January 2024 (2024-01-19), XP030313780, Retrieved from the Internet: URL:https://dms.mpeg.expert/doc_end_user/d ocuments/144_Hannover/wg11/MDS23220_WG03_N 01067.zip MDS23220_WG03_N01067_23090-14_2nd_edition_ cl.docx [retrieved on 2024-01-19] * section 1; page 1 * | 1-14 | |
| A | PATRICE HIRTZLIN (INTERDIGITAL) ET AL: "[SD] EE7 - AR anchoring in scene graph", 139. MPEG MEETING; 20220718 - 20220722; ONLINE; (MOTION PICTURE EXPERT GROUP OR ISO/IEC JTC1/SC29/WG11), , no. m59958 18 June 2022 (2022-06-18), XP030302586, Retrieved from the Internet: URL:https://dms.mpeg.expert/doc_end_user/d ocuments/139_OnLine/wg11/m59958-v1-m59958_ SD_EE7_ar_anchoring_in_scene_graph.zip m59958_SD_EE7_ar_anchoring_in_scene_graph. docx [retrieved on 2022-06-18] * sections 1-3 * | 1-14 | TECHNICAL FIELDS SEARCHED (IPC) |

The present search report has been drawn up for all claims

| Place of search | Date of completion of the search | Examiner |
|---|---|---|
| The Hague | 24 June 2024 | Arpaci, Mutlu |

EPO FORM 1503 03.82 (P04C01)

page 3 of 3